# EUROPEAN PATENT APPLICATION

(11) **EP 4 148 082 A1**
(43) Date of publication of application: **15.03.2023**
(21) Application number: 21460043.9
(22) Date of filing: 02.12.2021
(51) Int. Cl.: C08G 63/16

(54) **LINEAR POLYESTER BIO-POLYOLS AND THE METHOD OF THEIR PREPARATION**

(30) Priority: 10.09.2021 PL 43891421
(71) Applicant: Politechnika Gdanska, 80-233 Gdansk (PL)
(72) Inventor: Parcheta-,Szwindowska, 83-100 Pruszcz Gdanski (PL); Datta, Janusz, 81-650 Gdynia (PL); Rohde, Kamila, 80-506 Gdansk (PL)
(74) Representative: Pawlowska, Justyna

(57) **Abstract**

The subject of the invention is linear polyester bio-polyols obtained according to the method, and the method of obtaining linear polyester bio-polyols constitutes the invention. The method is characterized in that in the first step, bio-azelaic acid or bio-succinic acid, or a mixture of bio-azelaic acid with bio-succinic acid, with the molar ratio of both bio-acids ranging from 5:1 to 1:5, is mixed with bio-1,3-propanediot of natural origin or bio-1,4-butanediol of natural origin or a mixture of bio-1,3-propanediol with bio-1,4-butanediol at the molar ratio of both bio-glycols in the range from 5:1 to 1:5. An excess of bio-glycol or bio-glycol mixture is used in such a way that the molar ratio of bio-acid or bio-acid mixture to bio-glycol or bio-glycol mixture is between 1:1.10 and 1:1.40 in all cases. The resulting mixture is then heated in the first stage for 6-10 hours at a temperature of 140 to 160 °C under an inert gas atmosphere, and then the second stage of the polycondensation process is carried out in such a way that the mixture is heated to a temperature of 160-180 °C and the reaction is carried out under reduced pressure, and the polycondensation process is carried out until the product has an acid number lower than 3 mg KOH/g. Linear bio-polyols have an acid number lower than 3 mg KOH/g, a hydroxyl number higher than 30 mg KOH/g, and a functionality of 2.

## Description

The invention refers to linear polyester bio-polyols and a method of obtaining linear polyester bio-polyols using compounds of natural origin - a mixture of bio-dicarboxylic acids, bio-glycols and their mixtures. The invention is to be used in the plastics industry for the production of various types of polyurethanes, especially foams, elastomers, coating materials, paints, varnishes and adhesives.

Polyols are one of the two main components from which polyurethanes are obtained that influence the properties of the obtained product. They are usually high viscosity liquids terminated with hydroxyl or partially amino groups. The group of the most important polyols used in the synthesis of polyurethanes includes polyether and polyester polyols, the most common of which are polyether polyols. Polyester polyols, including linear polyols, have a molecular weight from approx. 1000 to approx. 6000 g/mol and are the second group of polyols with the highest global consumption. An important step in the process of preparation of linear polyester polyols is the esterification or transesterification reaction between diols and dicarboxylic acids or diols and dicarboxylic acid esters, respectively. During this reaction, a by-product - water or alcohol - is released. It is disadvantageous if along with the water, a significant amount of the substrate introduced into the reactor, mainly glycol, is released, as it deteriorates the reaction efficiency and changes the properties of the obtained polyester polyol. The esterification and transesterification reactions are reversible, therefore, in order to shift the equilibrium of the reaction towards the main product, the by-product must be removed from the reaction medium.

A desirable group of polyester polyols for use in the plastics industry for the production of various types of polyurethanes, especially for the preparation of clastomeric materials, foams, paints, coatings and varnishes, is the group of linear polyester polyols with a low acid number, especially the group characterized by an acid number below 3 mg KOH/g. Polyester polyols with a high value of this parameter, especially above 3 mg KOH/g, are not suitable for the production of polyurethanes with elastic properties. The higher the acid number, the more likely the carboxyl groups are to react with isocyanate groups to form carbon dioxide as a by-product, which acts as a blowing agent during the reaction. As a result, foamed polyurethane materials are formed.

It is also important that the hydroxyl number is high, especially above 40 mg KOH/g. The higher the hydroxyl number, the greater the applicability for viscoelastic and rigid polyurethane foams, and the lower the applicability for elastomeric polyurethane materials. For this reason, polyester polyols with a high hydroxyl number, especially above 100 mg KOH/g, are used to obtain viscoelastic and rigid polyurethane foams. In addition, it is expected that they will be linear polyester polyols terminated on both sides of the chain with hydroxyl groups -OH, that is, they should have a functionality of 2 and, moreover, have a low viscosity at the processing temperature.

In the known methods of obtaining linear polyester polyols, so far mainly monomers of petrochemical origin have been used, which has been described in many publications [D. N. Bikiaris, D. S. Achilias, 'Synthesis of Poly(alkylene Succinate) Biodegradable Polyesters, Part I: Mathematical Modelling of the Esterification Reaction', Polymer, 47.17, 2006, 4851-60; Dimitrios N. Bikiaris, George Z. Papageorgiou, Dimitris S. Achilias, 'Synthesis and Comparative Biodegradability Studies of Three Poly(alkylene Succinate)s', Polymer Degradation and Stability, 91.1, 2006, 31-43; K. Chrissafis, K. M. Paraskevopoulos, D. N. Bikiaris, 'Thermal Degradation Mechanism of Poly(ethylene Succinate) and Poly(butylene Succinate): Comparative Study', Thermochimica Acta, 435.2, 2005, 142-50; K. Chrissafis, K. M. Paraskevopoulos, D. N. Bikiaris, 'Thermal Degradation Kinetics of the Biodegradable Aliphatic Polyester, Poly(propylene Succinate)', Polymer Degradation and Stability, 91.1, 2006, 60-68]. The above publications describe the synthesis of linear polyester polyols in a two-step process by the melt polycondensation method. In the first step, succinic acid is esterified with one of the glycols with the aid of titanium butoxide as a catalyst. The process is carried out at a temperature of 190°C in an atmosphere of argon, an inert gas. After the theoretical amount of water, i.e. the amount calculated from the stoichiometric amounts of added monomers, has been removed as a by-product, the second step of the reaction - polycondensation - is performed. The second stage is carried out at a temperature of 140 to 245 °C, under reduced pressure, for 1 hour. The products obtained in this way have a high acid number, ranging from 8 to 75 mg KOH/g, and a hydroxyl number ranging from 40 to 150 mg KOH/g. It is known that such products, due to their properties, cannot be used in industry as components of polyurethane systems with elastic properties, especially for coatings, adhesives, paints or elastomeric products, so in practice they have limited possibilities of use. Water, as a by-product obtained in the first stage of the process, may contain significant amounts of impurities, as a result of the fact that the substrates used, especially glycols, are also transferred into the water.

The synthesis of linear polyester polyols from petrochemical monomers is also described in [Chia Jung Tsai and others, 'Synthesis and Characterization of Polyesters Derived from Succinic Acid, Ethylene Glycol and 1,3-Propanediol', European Polymer Journal, 44.7, 2008, 2339-47]. The synthesis was carried out with the use of ethylene and propylene glycol, mixtures of these glycols and succinic acid, in the presence of a catalyst in the form of titanium tetraisopropoxide, which is already used in the first stage of the reaction.

The method of obtaining polyester polyols using monomers of natural origin is described in the following publications: [R. Miller, 'Evaluating the Properties and Performance of Susterra® 1, 3 Propanediol and Biosuccinium™ Sustainable Succinic Acid in TPU Applications', in CPI Polyurethanes 2012 Technical Conference, 2012, pp. 1-19; Mark F. Sonnenschein and others, 'Comparison of Adipate and Succinate Polyesters in Thermoplastic Polyurethanes', Polymer, 51,16, 2010, 3685-92]. The synthesis is carried out with the use of dicarboxylic acids such as natural succinic acid and petrochemical adipic acid, and glycols such as 1,4-butanediol of petrochemical origin and 1,3-propanediol of natural origin. A specified amount of substrates is added to a three-necked flask, a stirrer and a flow of nitrogen, an inert gas, and then the mixture is heated to 110°C, and 0.1% of the catalyst, i.e. dibutyltin dilaurate or dibutyltin oxide, is added, then the mixture is heated to 180 °C. Heating the mixture up to 110 °C allows the dicarboxylic acid to melt and mix with glycols, but it does not allow for removing a significant amount of water. The course of the synthesis is monitored by determining the acid number. In this process, the reaction is carried out without the addition of a catalyst until the temperature of the reaction mixture reaches 110 °C, and then the catalyst is introduced into the mixture. The publication does not contain information on the amount of water removed in the process and its purity.

Furtwengler, Perrin, Redl and Avérous [P. Furtwengler, R. Perrin, A. Redl, L. Avérous: Synthesis and characterization of polyurethane foams derived of fully renewable polyester polyols from sorbitol, Eur. Polym. J. 97, 319-327, 2017] used a sorbitol-based bio-polyol for the synthesis of polyurethane foams. The polyols were obtained as a result of a two-stage esterification reaction of sorbitol (of plant origin) with succinic acid and adipic acid (both of petrochemical origin), by also adding appropriate diols such as: ethanediol, 1,3-propanediol, 1,4-butanediol, 1,6-hexanediol, 1,8-octanediol, 1,10-decanediol, 1,12-dodecanediol. The reactions were carried out without the use of a catalyst, which allowed to limit side reactions and obtain a linear structure of esterification products. The obtained sorbitol-based bio-polyols were characterized by a hydroxyl number ranging from 440 to 680 mg KOH/g, and an acid number ranging from 11 to 49 mg KOH/g. Polyols obtained with the use of 1,8-butanediol, 1,10-decanediol and 1,12-dodecanediol exhibited a viscosity value above 50 Pa·s, which was unfavorable for the foaming process; therefore they were not used for further research.

Ruan, Luan, Wang and Shen [M. Ruan, H. Luan, G. Wang, M. Shen, Bio-polyols synthesized from bio-based 1,3-propanediol and applications on polyurethane reactive hot melt adhesives, Industrial Crops and Products, Volume 128, February 2019, Pages 436-444] used polyester bio-polyols in polyurethane reactive hot melt adhesives (PURI-IMA). Bio-polyols were synthesized using 1,3-propanediol of plant origin and adipic, sebacic, suberic or dodecanedioic acid (all of petrochemical origin), and tetraisopropyl orthotitanate was used as the catalyst. Measurements of the acid number ranged from 0.3 to 0.9 mg KOH/g, the hydroxyl number ranged from 30 to 53 mg KOH/g and the dynamic viscosity ranged from 1.9 to 2.3 Pa·s.

There is a requirement to provide methods of obtaining polyester polyols that make it possible to obtain a product with the properties that enable them to be used in the plastics industry for the production of polyurethanes with properties dedicated to specific applications.

The method of obtaining linear polyester bio-polyols is characterized according to the invention, in that in the first step esterification is carried out in such a way that a bio-dicarboxylic acid, such as azelaic acid or succinic acid, or a mixture of bio-dicarboxylic acids such as succinic acid and azelaic acid of natural origin, is mixed with glycol in the form of 1,3-propanediol or 1,4-butanediol of natural origin, or a mixture of 1,3-propanediol of natural origin with 1,4-butanediol of natural origin, maintaining the molar ratio of one or both bio-dicarboxylic acids, as well as one or both glycols, in the ranges from 1:1 to 1:5, where an excess of glycol or a mixture of glycols in relation to the bio-acid or mixture of bio-acids is used in such a way that the molar ratio of bio-azelaic acid or dicarboxylic bio-acid mixture to glycol or glycol mixture in all cases ranges from 1:1.05 to 1:1.40. The resulting mixture is then heated: according to the method, in the first step for 5 to 10 hours at a temperature of 140 to 180 °C in an inert gas atmosphere, until the acid number is halved compared to the initial acid number, assuming that the initial acid number is tested after all monomers have completely dissolved. The acid number is tested using known methods - currently in accordance with the PN-86/C-4505/05 standard. The method is based on direct titration of the tested solute in equal amounts of solvent, which is acetone (30 ml), with standard KOH solution (concentration 0.1 M) against phenolphthalein to a pink color that persists for more than 15 seconds.

Four embodiments of the method were provided according to the invention: variant 1: 1 bio-acid and 1 bio-glycol; variant 2: 2 bio-acids and 2 bio-glycols; variant 3: 1 bio-acid and 2 bio-glycols; variant 4: 2 bio-acids and 1 bio-glycol. Because of that, depending on whether harder, softer, or more flexible materials need to be obtained, a different bio-polyol can be selected. The terms "bio-acid" and "bio-glycol" are used interchangeably with the terms "acid of natural origin" and "glycol of natural origin", respectively.

Then, the second stage, i.e. polycondensation, is performed in such a way that the mixture of acid and glycol, having an acid number at least 50% lower than the initial one, is heated to a temperature of between 160 and 220 °C and the reaction is carried out under reduced pressure, and the polycondensation process is carried out until the product, i.e. the linear polyester bio-polyol, reaches the acid number lower than 3 mg KOH/g, which is tested according to the PN-86/C-4505/05 standard.

The invention also refers to linear polyester bio-polyols with an acid number of less than 3 mg KOH/g, a hydroxyl number of more than 30 mg KOH/g and a functionality of 2, which are obtained according to the procedure described above. The values result from the titration.

Preferably, the polycondensation is carried out in the presence of a polycondensation catalyst in an amount of between 0.01 and 1% by weight, in terms of the glycol or glycol mixture. The polycondensation catalyst may be added after the completion of the first step of the reaction but before proceeding to the second step.

Preferably, the production of linear polyester bio-polyols is carried out until a product with an acid number of less than 1 mg KOH/g is obtained.

The method according to the invention enables the effective production of linear polyester bio-polyols due to the proper selection of the components of the chemical formulation and appropriate reaction conditions. The method makes it possible to obtain linear polyester bio-polyols of various, designed as required, molecular weights. The product obtained by using the method can therefore be widely used in industry.

In particular, the use of a mixture of bio-dicarboxylic acids and a mixture of bio-glycols makes it possible to obtain linear polyester bio-polyols with low viscosity at room temperature, which is advantageous especially during their use in the synthesis of polyurethane foams, which in industry takes place at room temperature. Higher-viscosity polyester bio-polyols can be used in the synthesis of elastomers and thermoplastic polyurethanes, the synthesis of which takes place at elevated temperatures, so the polyols can be heated to an appropriate temperature before use. Because of this, the method can be used in industry in the production of solid and foamed polyurethanes.

The linear polyester bio-polyols obtained according to the invention exhibit parameters dedicated to the plastics industry for the production of solid polyurethanes with flexible properties, various types of polyurethane foams (rigid, semi-rigid, flexible), adhesives and coatings. Compared to the parameters of the characteristics of the petrochemical polyols previously used in the industry, the bio-polyols obtained by the process according to the invention show comparable or even better expected values of parameters such as acid number, hydroxyl number or viscosity. The invention makes it possible to obtain linear bio-polyols with an acid number below 3 mg KOH/g, a hydroxyl number above 30 mg KOH/g and functionality of 2. These properties indicate the possibility of using the obtained bio-polyol in the polyurethane industry to obtain a product with the desired elastic properties, as the mentioned parameters affect the final properties of the product. In particular, the linear polyester bio-polyols produced by the process according to the invention have a low acid number, which confirms their applicability in the production of flexible polyurethane materials. The acid number indicates the degree of conversion of the polyol. The higher the degree of monomer conversion, the closer the molecular weights of the formed polyester macromolecules are to the designed ones.

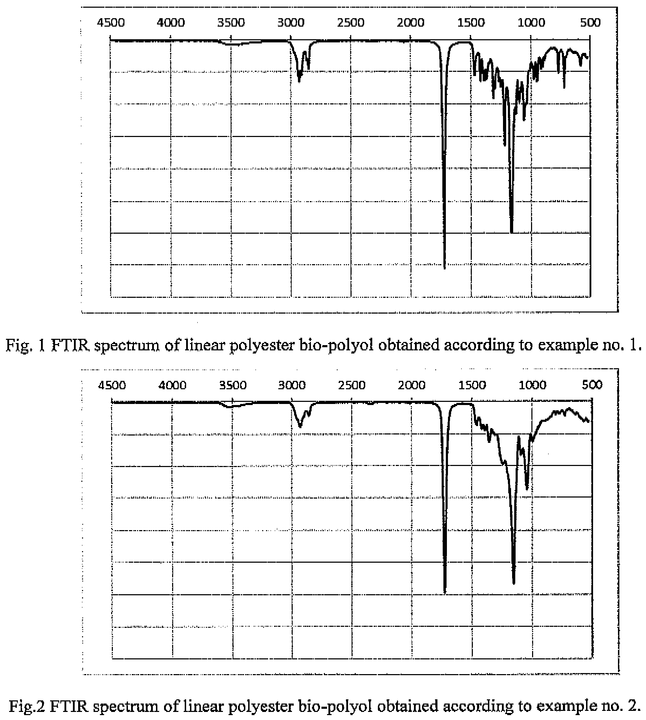

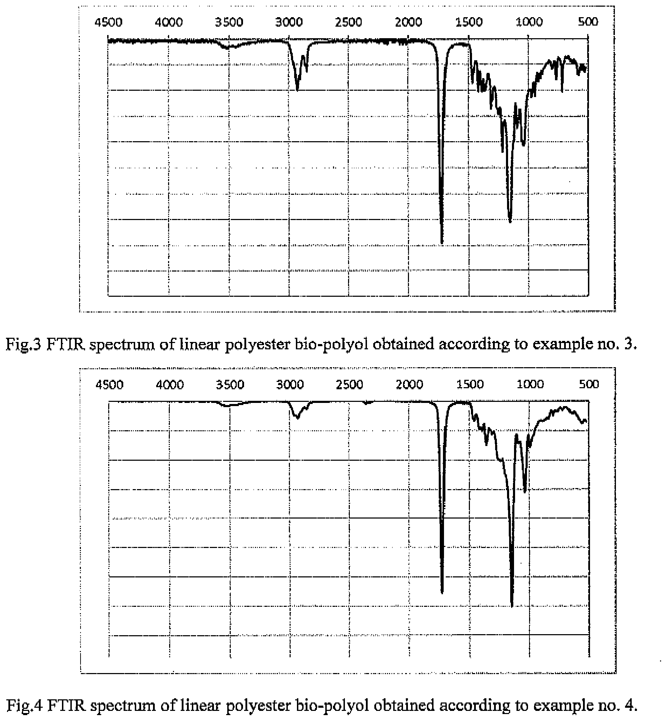

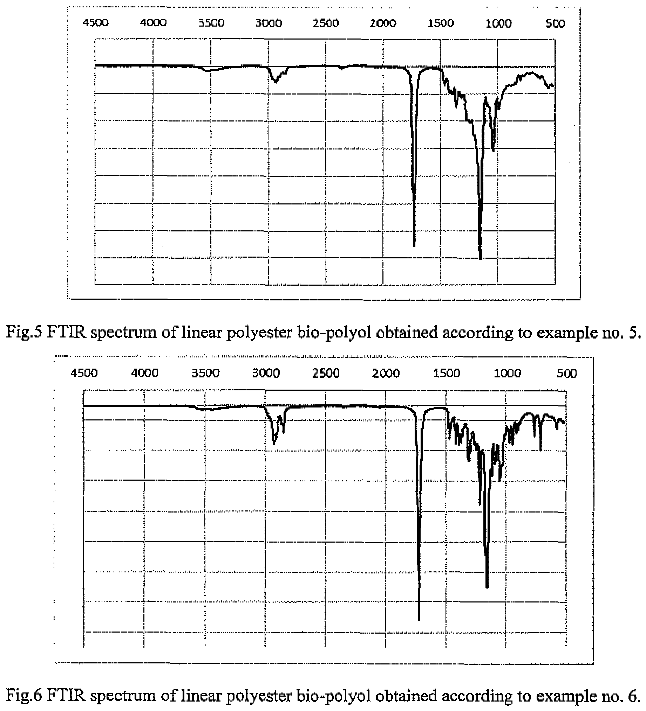

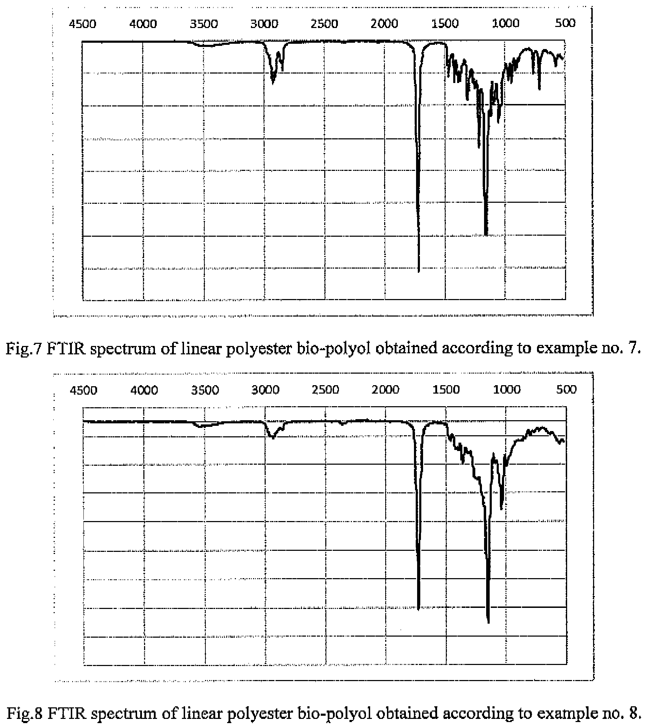

The invention is described in more detail in the following examples, together with basic physicochemical parameters of the polyester bio-polyols obtained according to the method. In addition, Figure 1 shows the FTIR spectra of the linear polyester bio-polyols obtained according to particular examples.

### Example 1

Bio-propylene glycol of natural origin with molar mass Mn = 76.09 g/mol in the amount of 134 g, and bio-azelaic acid with molar mass Mn = 188.22 g/mol in the amount of 276 g (the acid-to-glycol molar ratio is 1: 1,2) are added to a reactor with a capacity of 0.5 dm³ equipped with a 4-neck lid, a capillary supplying dried and deoxygenated inert gas, stirrer, thermometer, Vigreux column, dephlegmator - an attachment enabling both by-product removal and its partial return to the reaction medium, and a receiving flask. The mixture is gradually heated to 140 °C under an inert gas atmosphere with constant stirring. The first step of the synthesis - esterification - is carried out for 9 hours. During the first stage of the synthesis, the change in the acid number is monitored, and on this basis the time and conditions of the reaction are determined. After reaching the acid number equal to half of the initial acid number, the second stage of the synthesis is started. The vacuum is turned on, the inert gas supply is turned off, and the temperature is increased to 160 °C. The second stage of the synthesis - polycondensation - is carried out until the acid number Lk <2 mg KOH/g is achieved, which is monitored during the synthesis using a known method, i.e. according to the PN-86/C-4505/05 standard. The obtained product has the following characteristics:
Acid number: Lk = 1.5 mg KOH/g, determined using the method according to PN-86/C-4505/05,
Hydroxyl number: LOH = 134 mg KOH/g, determined using the method according to PN-EN ISO 2554:2001,
Functionality: f = 2,
Average molecular weight: Mn = 4,000 g/mol, determined by gel permeation chromatography (GPC).

Due to properties such as low acid and hydroxyl numbers, the product can be used to obtain many flexible polyurethanes, e.g. watch straps, phone cases, etc.

**Table 1. FTIR spectrum analysis - identification of functional groups present in the chemical structure of the linear polyester bio-polyol obtained according to example 1.**

| Wavenumber [cm⁻¹] | Functional group |
|---|---|
| 3600-3200 | -OH- |
| 3000-2850 | -CH₂- |
| 1730-1710 | -C(O)- |
| 1150 | -C-(O)-O- |
| 1030 | -C-C-O- |

### Example 2

Bio-propylene glycol of natural origin with molar mass Mn = 76.09 g/mol in the amount of 153 g and a mixture of bio-dicarboxylic acids: bio-succinic acid with molar mass Mn = 118.09 g/mol in the amount of 99 g, and bio-azelaic acid with a molar mass Mn = 188.22 g/mol in the amount of 158 g (the molar ratio of bio-acids in the mixture was 1:1; the molar ratio of bio-acids mixture to the glycol was 1:1.2) are added to a reactor with a capacity of 0.5 dm³ equipped with a 4-neck lid, a capillary supplying dried and deoxygenated inert gas, stirrer, thermometer, Vigreux column, dephlegmator - an attachment enabling both by-product removal and its partial return to the reaction medium, and a receiving flask. The mixture is gradually heated to 140-150 °C under an inert gas atmosphere with constant stirring. The first step of the synthesis - esterification - is carried out for 7 hours. During the first stage of the synthesis, the change in the acid number is monitored, and on this basis the time and conditions of the reaction are determined. After reaching the acid number equal to half of the initial acid number, the second stage of the synthesis is started.. The vacuum is turned on, and the inert gas supply is turned off, and the temperature is increased to 170 °C. The second stage of the synthesis - polycondensation -is carried out until the acid number Lk <1 mg KOH/g is achieved, which is monitored during the synthesis using a known method, i.e. according to the PN-86/C-4505/05 standard. The obtained product has the following characteristics:
Acid number: Lk = 0.76 mg KOH/g, determined using the method according to PN-86/C-45 05/05,
Hydroxyl number: LOH = 148 mg KOH/g, determined using the method according to PN-EN ISO 2554: 2001,
Functionality: f = 2,
Average molecular weight: Mn = 2,300 g/mol, determined by gel permeation chromatography (GPC).

Due to the properties such as low acid and hydroxyl numbers, the product can be used to obtain many flexible polyurethanes, e.g. watch straps, phone cases, etc.

**Table 2. FTIR spectrum analysis - identification of functional groups present in the chemical structure of the linear polyester bio-polyol obtained according to example 2.**

| Wavenumber [cm⁻¹] | Functional group |
|---|---|
| 3600-3200 | -OH- |
| 3000-2850 | -CH₂- |
| 1730-1710 | -C(O)- |
| 1150 | -C-(O)-O- |
| 1030 | -C-C-O- |

### Example 3

Bio-propylene glycol of natural origin with molar mass Mn = 76.09 g/mol in the amount of 169 g and a mixture of bio-dicarboxylic acids: bio-succinic acid with molar mass Mn = 118.09 g/mol in the amount of 165 g, and bio-azelaic acid with a molar mass Mn = 188.22 g/mol in the amount of 85,5 g (the molar ratio of bio-acids in the mixture was 3:1; the molar ratio of bio-acids mixture to the glycol was 1:1.2) are added to a reactor with a capacity of 0.5 dm³ equipped with a 4-neck lid, a capillary supplying dried and deoxygenated inert gas, stirrer, thermometer, Vigreux column, dephlegmator - an attachment enabling both by-product removal and its partial return to the reaction medium, and a receiving flask. The mixture is gradually heated to 140°C under an inert gas atmosphere with constant stirring. The first step of the synthesis - esterification - is carried out for 9 hours. During the first stage of the synthesis, the change in the acid number is monitored, and on this basis the time and conditions of the reaction are determined. After reaching the acid number equal to half of the initial acid number, the second stage of the synthesis is started.. The vacuum is turned on, and the inert gas supply is turned off, and the temperature is increased to 170 °C. The second stage of the synthesis - polycondensation -is carried out until the acid number Lk <1 mg KOH/g is achieved, which is monitored during the synthesis using a known method, i.e. according to the PN-86/C-4505/05 standard. The obtained product has the following characteristics:
Acid number: Lk = 0.90 mg KOH/g, determined using the method according to PN-86/C-4505/05,
Hydroxyl number: LOH = 128 mg KOH/g, determined using the method according to PN-EN ISO 2554: 2001,
Functionality: f = 2,
Average molecular weight: Mn = 2,250 g/mol, determined by gel permeation chromatography (GPC).

Due to the properties such as low acid and hydroxyl numbers, the product can be used to obtain many flexible polyurethanes, e.g. watch straps, phone cases, etc.

**Table 3. FTIR spectrum analysis - identification of functional groups present in the chemical structure of the linear polyester bio-polyol obtained according to example 3.**

| Wavenumber [cm⁻¹] | Functional group |
|---|---|
| 3600-3200 | -OH- |
| 3000-2850 | -CH₂- |
| 1730-1710 | -C(O)- |
| 1150 | -C-(O)-O- |
| 1030 | -C-C-O- |

### Example 4

Bio-propylene glycol of natural origin with molar mass Mn = 76.09 g/mol in the amount of 141 g and a mixture of bio-dicarboxylic acids: bio-succinic acid with molar mass Mn = 118.09 g/mol in the amount of 45 g, and bio-azelaic acid with a molar mass Mn = 188.22 g/mol in the amount of 218 g (the molar ratio of bio-acids in the mixture was 1:3; the molar ratio of bio-acids mixture to the glycol was 1:1.2) are added to a reactor with a capacity of 0.5 dm³ equipped with a 4-neck lid, a capillary supplying dried and deoxygenated inert gas, stirrer, thermometer, Vigreux column, dephlegmator - an attachment enabling both by-product removal and its partial return to the reaction medium, and a receiving flask. The mixture is gradually heated to 145°C under an inert gas atmosphere with constant stirring. The first step of the synthesis - esterification - is carried out for 10 hours. During the first stage of the synthesis, the change in the acid number is monitored, and on this basis the time and conditions of the reaction are determined. After reaching the acid number equal to half of the initial acid number, the second stage of the synthesis is started. The vacuum is turned on, and the inert gas supply is turned off, and the temperature is increased to 175°C. The second stage of the synthesis - polycondensation -is carried out until the acid number Lk <1 mg KOH/g is achieved, which is monitored during the synthesis using a known method, i.e. according to the PN-86/C-4505/05 standard. The obtained product has the following characteristics:
Acid number: Lk = 0.92 mg KOH/g, determined using the method according to PN-86/C-4505/05,
Hydroxyl number: LOH = 122 mg KOH/g, determined using the method according to PN-EN ISO 2554: 2001,
Functionality: f = 2,
Average molecular weight: Mn = 2,800 g/mol, determined by gel permeation chromatography (GPC).

Due to the properties such as low acid and hydroxyl numbers, the product can be used to obtain many flexible polyurethanes, e.g. watch straps, phone cases, etc.

**Table 4. FTIR spectrum analysis - identification of functional groups present in the chemical structure of the linear polyester bio-polyol obtained according to example 4.**

| Wavenumber [cm⁻¹] | Functional group |
|---|---|
| 3600-3200 | -OH- |
| 3000-2850 | -CH₂- |
| 1730-1710 | -C(O)- |
| 1150 | -C-(O)-O- |
| 1030 | -C-C-O- |

### Example 5

A mixture of bio-glycols: bio-propylene glycol of natural origin with molar mass Mn = 76.09 g/mol in the amount of 35 g and bio-butylene glycol of natural origin with molar mass Mn = 90.12 g/mol in the amount of 145 g, and bio-azelaic acid with a molar mass Mn = 188.22 g/mol in the amount of 300 g (the molar ratio of bio-glycols in the mixture was 1:4; the molar ratio of bio-acid to the glycols mixture was 1:1.3) are added to a reactor with a capacity of 0.5 dm³ equipped with a 4-neck lid, a capillary supplying dried and deoxygenated inert gas, stirrer, thermometer, Vigreux column, dephlegmator - an attachment enabling both by-product removal and its partial return to the reaction medium, and a receiving flask. The mixture is gradually heated to 145°C under an inert gas atmosphere with constant stirring. The first step of the synthesis - esterification - is carried out for 10 hours. During the first stage of the synthesis, the change in the acid number is monitored, and on this basis the time and conditions of the reaction are determined. After reaching the acid number equal to half of the initial acid number, the second stage of the synthesis is started. The vacuum is turned on, and the inert gas supply is turned off, and the temperature is increased to 175 °C. The second stage of the synthesis - polycondensation -is carried out until the acid number Lk <2 mg KOH/g is achieved, which is monitored during the synthesis using a known method, i.e. according to the PN-86/C-4505/05 standard. The obtained product has the following characteristics;
Acid number: Lk = 1.36 mg KOH/g, determined using the method according to PN-86/C-4505/05,
Hydroxyl number: LOH = 98 mg KOH/g, determined using the method according to PN-EN ISO 2554: 2001,
Functionality: f = 2,
Average molecular weight: Mn = 2,500 g/mol.

Due to the properties such as low acid and hydroxyl numbers, the product can be used to obtain many flexible polyurethanes, e.g. watch straps, phone cases, etc.

**Table 5. FTIR spectrum analysis - identification of functional groups present in the chemical structure of the linear polyester bio-polyol obtained according to example 5.**

| Wavenumber [cm⁻¹] | Functional group |
|---|---|
| 3600-3200 | -OH- |
| 3000-2850 | -CH₂- |
| 1730-1710 | -C(O)- |
| 1150 | -C-(O)-O- |
| 1030 | -C-C-O- |

### Example 6

Bio-butylene glycol of natural origin with molar mass Mn = 90.12 g/mol in the amount of 133 g and bio-azelaic acid with a molar mass Mn = 188.22 g/mol in the amount of 260 g (the molar ratio of bio-acid to the bio-glycol was 1:1.1) are added to a reactor with a capacity of 0.5 dm³ equipped with a 4-neck lid, a capillary supplying dried and deoxygenated inert gas, stirrer, thermometer, Vigreux column, dephlegmator - an attachment enabling both by-product removal and its partial return to the reaction medium, and a receiving flask. The mixture is gradually heated to 145°C under an inert gas atmosphere with constant stirring. The first step of the synthesis - esterification - is carried out for 10 hours. During the first stage of the synthesis, the change in the acid number is monitored, and on this basis the time and conditions of the reaction are determined. After reaching the acid number equal to half of the initial acid number, the second stage of the synthesis is started. The vacuum is turned on, and the inert gas supply is turned off, and the temperature is increased to 175°C. The second stage of the synthesis - polycondensation -is carried out until the acid number Lk <3 mg KOH/g is achieved, which is monitored during the synthesis using a known method, i.e. according to the PN-86/C-4505/05 standard. The obtained product has the following characteristics:
Acid number: Lk = 2.13 mg KOH/g, determined using the method according to PN-86/C-4505/05,
Hydroxyl number: LOH = 90 mg KOH/g, determined using the method according to PN-EN ISO 2554: 2001,
Functionality: f = 2,
Average molecular weight: Mn = 4,000 g/mol.

Due to the properties such as low acid and hydroxyl numbers, the product can be used to obtain many flexible polyurethanes, e.g. watch straps, phone cases, etc.

**Table 6. FTIR spectrum analysis - identification of functional groups present in the chemical structure of the linear polyester bio-polyol obtained according to example 6.**

| Wavenumber [cm⁻¹] | Functional group |
|---|---|
| 3600-3200 | -OH- |
| 3000-2850 | -CH₂- |
| 1730-1710 | -C(O)- |
| 1150 | -C-(O)-O- |
| 1030 | -C-C-O- |

### Example 7

Bio-butylene glycol of natural origin with molar mass Mn = 90.12 g/mol in the amount of 150 g and bio-azelaic acid with a molar mass Mn = 188.22 g/mol in the amount of 250 g (the molar ratio of bio-acid to the bio-glycol was 1:1.25) are added to a reactor with a capacity of 0.5 dm³ equipped with a 4-neck lid, a capillary supplying dried and deoxygenated inert gas, stirrer, thermometer, Vigreux column, dephlegmator - an attachment enabling both by-product removal and its partial return to the reaction medium, and a receiving flask. The mixture is gradually heated to 145°C under an inert gas atmosphere with constant stirring. The first step of the synthesis - esterification - is carried out for 10 hours. During the first stage of the synthesis, the change in the acid number is monitored, and on this basis the time and conditions of the reaction are determined. After reaching the acid number equal to half of the initial acid number, the second stage of the synthesis is started. The vacuum is turned on, and the inert gas supply is turned off, and the temperature is increased to 175°C. The second stage of the synthesis - polycondensation -is carried out until the acid number Lk <1 mg KOH/g is achieved, which is monitored during the synthesis using a known method, i.e. according to the PN-86/C-4505/05 standard. The obtained product has the following characteristics:
Acid number: Lk = 0,97 mg KOH/g, determined using the method according to PN-86/C-4505/05,
Hydroxyl number: LOH =110 mg KOH/g, determined using the method according to PN-EN ISO 2554: 2001,
Functionality: f = 2,
Average molecular weight: Mn = 4,000 g/mol.

Due to the properties such as low acid and hydroxyl numbers, the product can be used to obtain many flexible polyurethanes, e.g. watch straps, phone cases, etc.

**Table 7. FTIR spectrum analysis - identification of functional groups present in the chemical structure of the linear polyester bio-polyol obtained according to example 7.**

| Wavenumber [cm⁻¹] | Functional group |
|---|---|
| 3600-3200 | -OH- |
| 3000-2850 | -CH₂- |
| 1730-1710 | -C(O)- |
| 1150 | -C-(O)-O- |
| 1030 | -C-C-O- |

### Example 8

A mixture of bio-glycols: bio-propylene glycol of natural origin with molar mass Mn = 76.09 g/mol in the amount of 124 g and bio-butylene glycol of natural origin with molar mass Mn = 90.12 g/mol in the amount of 36,5 g, and a mixture of bio-dicarboxylic acids: bio-azelaic acid with a molar mass Mn = 188.22 g/mol in the amount of 188 g and bio-succinic acid with molar mass Mn = 118.09 g/mol in the amount of 60 g (the molar ratio of bio-glycols in the mixture was 4:1; the molar ratio of bio-acids in the mixture was 2:1; the molar ratio of bio-acids mixture to the bio-glycols mixture was 1:1.35) are added to a reactor with a capacity of 0.5 dm³ equipped with a 4-neck lid, a capillary supplying dried and deoxygenated inert gas, stirrer, thermometer, Vigreux column, dephlegmator - an attachment enabling both by-product removal and its partial return to the reaction medium, and a receiving flask. The mixture is gradually heated to 145°C under an inert gas atmosphere with constant stirring. The first step of the synthesis - esterification - is carried out for 10 hours. During the first stage of the synthesis, the change in the acid number is monitored, and on this basis the time and conditions of the reaction are determined. After reaching the acid number equal to half of the initial acid number, the second stage of the synthesis is started. The vacuum is turned on, and the inert gas supply is turned off, and the temperature is increased to 175 °C. The second stage of the synthesis - polycondensation -is carried out until the acid number Lk <2 mg KOH/g is achieved, which is monitored during the synthesis using a known method, i.e. according to the PN-86/C-4505/05 standard. The obtained product has the following characteristics:
Acid number: Lk = 1.15 mg KOH/g, determined using the method according to PN-86/C-4505/05,
Hydroxyl number: LOH = 89 mg KOH/g, determined using the method according to PN-EN ISO 2554: 2001,
Functionality: f = 2,
Average molecular weight: Mn = 2,500 g/mol.

Due to the properties such as low acid and hydroxyl numbers, the product can be used to obtain many flexible polyurethanes, e.g. watch straps, phone cases, etc.

**Table 8. FTIR spectrum analysis - identification of functional groups present in the chemical structure of the linear polyester bio-polyol obtained according to example 8.**

| Wavenumber [cm⁻¹] | Functional group |
|---|---|
| 3600-3200 | -OH- |
| 3000-2850 | -CH₂- |
| 1730-1710 | -C(O)- |
| 1150 | -C-(O)-O- |
| 1030 | -C-C-O- |

## Claims

1. Method for preparation of linear polyester bio-polyols, in which in the first stage esterification of at least one bio-dicarboxylic acid with at least one bio-glycol is carried out to change the acid number to a value of at least 50% lower than the initial one, then in the second stage polycondensation is carried out, **characterized in that**, in the first stage bio-azelaic acid or bio-succinic acid, or a mixture of bio-azelaic acid with bio-succinic acid wherein a molar ratio of both bio-acids is from 5:1 to 1:5 is mixed with bio-1,3-propanediol of natural origin or bio-1,4-butanediol of natural origin or a mixture of bio-1,3-propanediol with bio-1,4-butanediol at the molar ratio of both bio-glycols ranging from 5:1 to 1:5, whereby an excess of bio-glycol or bio-glycol mixture is used in such a way that the molar ratio of bio-acid or bio-acid mixture to of bio-glycol or bio-glycol mixtures in all cases ranges from 1:1.10 to 1: 1.40, then the obtained mixture is heated in the first stage for 6-10 hours at a temperature of 140 to 160°C under an inert gas atmosphere, then, in the second stage, the polycondensation process is carried out in such a way that the mixture is heated to a temperature from 160 to 180°C and the reaction is carried out under reduced pressure, and the polycondensation process is carried out until the product reaches an acid number lower than 3 mg KOH/g.

2. The method according to claim 1, wherein the initial acid number is measured when the monomers are completely dissolved.

3. The method according to claim 1, wherein the polycondensation is carried out in the presence of a polycondensation catalyst in the amount of between 0.01 and 1% by weight in terms of glycol or glycol mixture.

4. The method according to claim 3, wherein the polycondensation catalyst is added after the completion of the first reaction stage but before the commencement of the second stage.

5. Linear polyester bio-polyols obtainable according to the method described in claims 1-4, **characterized in that** linear polyester bio-polyols are obtained from bio-azelaic acid or bio-succinic acid or a mixture of bio-azelaic acid with bio-succinic acid, with a molar ratio of both bio-acids ranging from 5:1 to 1:5, and from bio-1,3-propanediol or bio-1,4-butanediol or a mixture of bio-1,3-propanediol with bio-1,4-butanediol with the molar ratio of both glycols ranging from 5:1 to 1:5, wherein an excess of bio-glycol or bio-glycol mixtures is used in such a way that the molar ratio of bio-acid or bio-acid mixture to bio-glycol or bio-glycol mixture ranges from 1:1.10 to 1:1.40 and linear bio-polyols have an acid number lower than 3 mg KOH/g, a hydroxyl number higher than 30 mg KOH/g, and a functionality of 2.
